# EUROPÄISCHE PATENTSCHRIFT

(11) **EP 1 963 031 B1**
(45) Veröffentlichungstag und Bekanntmachung des Hinweises auf die Patenterteilung: **07.09.2011**
(21) Anmeldenummer: 06806254.6
(22) Anmeldetag: 13.10.2006
(51) Int. Cl.: B06B 3/00

(54) **VORRICHTUNG ZUM ULTRASCHALLBEARBEITEN EINES WERKSTÜCKS**
DEVICE FOR THE ULTRASONIC PROCESSING OF A WORKPIECE
DISPOSITIF POUR LE TRAITEMENT ULTRASONIQUE D'UNE PIÈCE USINÉE

(30) Priorität: 23.12.2005 DE 102005063230
(43) Veröffentlichungstag der Anmeldung: 03.09.2008
(73) Patentinhaber: Herrmann Ultraschalltechnik GmbH & Co. KG, 76307 Karlsbad-Ittersbach (DE)
(72) Erfinder: VOGLER, Ulrich, 88690 Uhldingen (DE); SCHICK, Klaus, 76165 Karlsruhe (DE)
(74) Vertreter: Steimle, Josef
(86) Internationale Anmeldenummer: PCT/EP2006/009902
(87) Internationale Veröffentlichungsnummer: WO 2007/079796

(56) Entgegenhaltungen:
- EP-A1- 0 815 955
- US-A- 4 647 336
- US-A1- 2004 094 603
- US-B1- 6 786 384

## Beschreibung

Die Erfindung betrifft eine Vorrichtung zum Ultraschallbearbeiten eines Werkstücks mittels einer Ultraschallschwingeinheit und gegebenenfalls einem Gegenwerkzeug, wobei das Werkstück an der Ultraschallschwingeinheit anliegt und die Ultraschallschwingeinheit einen Konverter, einen Booster und eine Sonotrode gemäβ Anspruch 1 aufweist.

Derartige Vorrichtungen zum Ultraschallbearbeiten eines Werkstücks sind hinreichend bekannt. So zeigt zum Beispiel die DE-A-44 39 284 eine derartige Vorrichtung, mit welcher Materialbahnen ultraschallverschweißt werden können. Die Halterung der Ultraschallschwingeinheit erfolgt dadurch, dass ein Schwingmodul mit einem umlaufenden Bund versehen wird und dieser umlaufende Bund in einer Haltevorrichtung eingeklemmt ist. Dieser umlaufende Bund muss sich in einem Schwingungsknoten befinden, so dass die longitudinalen Ultraschallschwingungen der Ultraschallschwingeinheit nicht oder nur in einem vernachlässigbaren Maß auf die Halterung übertragen werden.

Anstelle der festen Einspannung sind auch O-Ringe bekannt, die eine sehr gute Schwingungsentkopplung bewirken. O-Ringe sind jedoch sehr weich in radialer und in axialer Richtung.

Außerdem sind Z-förmige Lagerungen bekannt, mit denen ebenfalls eine gute Schwingungsentkopplung erzielt wird. Jedoch ist diese Lagerung in radialer Richtung relativ weich und Biegekräfte können nur eingeschränkt aufgenommen werden. Außerdem erfordert eine derartige Lagerung einen relativ großen Platzbedarf. Eine derartige Lagerung ist zum Beispiel aus der US-B-6,547,903 bekannt.

Eine weitere Lagerungsmöglichkeit ist aus der US-A-5,976,316 bekannt. Auch diese Lagerung erfordert relativ viel Platz in Umfangsrichtung. Weiterer Stand der Technik ergibt sich aus der WO-A-2004/041449, der DE-C-101 15 181 der US-A-5, 603, 444 , und der EP0815955.

Der Erfindung liegt die Aufgabe zugrunde, eine Vorrichtung der eingangs genannten Art zu schaffen, welche auf einfache und platzsparende Weise montiert beziehungsweise gehalten oder gelagert werden kann.

Diese Aufgabe wird bei einer Vorrichtung der eingangs genannten Art erfindungsgemäß dadurch gelöst, dass zwischen dem Konverter und der Sonotrode ein weiterer Booster vorgesehen ist und dass die beiden Booster eine Halterung für die Ultraschallschwingeinheit tragen.

Bei der erfindungsgemäßen Vorrichtung ist vorgesehen, dass zwei direkt hintereinander angeordnete Booster verwendet werden, die zusammen eine Halterung tragen, über welche die Ultraschallschwingeinheit an einem Gestell befestigt oder gelagert werden kann. Die Ultraschallschwingeinheit wird also nicht an einer einzigen Kontaktstelle ergriffen, sondern an zwei Kontaktstellen, wodurch höhere Haltekräfte und vor allem auch Biegekräfte übertragen werden können. Dabei kann die Ultraschallschwingeinheit z.B. in vertikaler Ausrichtung angeordnet und einseitig gelagert sein, wobei das Werkstück mit der Stirnseite der Sonotrode oder an deren Umfang bearbeitet wird. Bei einer anderen Ausführungsform kann die Ultraschallschwingeinheit z.B. in waagerechter Ausrichtung angeordnet und beidseitig gelagert sein, so dass das Werkstück, zum Beispiel eine Materialbahn oder dergleichen, mit der Umfangsfläche der Sonotrode bearbeitet wird. Die Lagerung kann bei dieser Ausgestaltung als Drehlagerung ausgeführt sein, so dass sich die Sonotrode um ihre Längsachse drehen kann. Die Sonotrode besitzt dann an beiden Seiten jeweils zwei Booster. Die erfindungsgemäße Vorrichtung besitzt bei optimaler Schwingungsentkopplung eine sehr hohe Beigesteifigkeit.

Bei einem bevorzugten Ausführungsbeispiel weist die Halterung ein die beiden Booster zumindest teilweise umgreifendes Rohrstück oder eine Hülse auf. Dies bedeutet, dass die Befestigung der Ultraschallschwingeinheit nicht direkt durch Kontaktierung der Booster erfolgt, sondern dass die beiden Booster ein Rohrstück tragen, welches dann gelagert wird. Dies hat den wesentlichen Vorteil, dass, insbesondere bei Drehlagerungen, die beiden Booster über eine einzige Lagerung gehalten werden, wodurch der bauliche Aufwand reduziert wird.

Dabei kontaktiert das Rohrstück die beiden Booster jeweils im Bereich der Schwingungsknoten. Dadurch wird eine optimale Schwingungsentkopplung in axialer Richtung erzielt. Dabei weisen die beiden Booster im Bereich ihrer Schwingungsknoten vorteilhaft eine insbesondere umlaufende Kontaktfläche für die Halterung auf. Dieser Schwingungsknoten ist im Booster relativ exakt bestimmbar und daher kann die Kontaktfläche genau positioniert werden. Außerdem ist eine derartige Kontaktfläche relativ einfach herstellbar. Die Kontaktflächen besitzen bevorzugt den gleichen Radius, d.h. sie liegen in der gleichen Umfangsfläche. Die beiden Booster können diskret als zwei Bauteile, jedoch auch als ein einziges Bauteil ausgeführt sein. Bei einer anderen Variante besitzen die Kontaktflächen unterschiedliche Radien, wobei der innere Radius größer ist als der äußere, so dass das Rohrstück einfacher aufschiebbar ist.

Insbesondere ist das Rohrstück dünnwandig ausgebildet, so dass die Bewegungen in radialer Richtung nur unwesentlich übertragen werden.

Um eine exakte Positionierung der Halterung an den Boostern zu ermöglichen, ist vorgesehen, dass wenigstens einer der Booster angrenzend an die Kontaktfläche einen umlaufenden Bund aufweist, an welchem die Halterung axial anliegt. Auf diese Weise wird sichergestellt, dass die Halterung bezüglich der Booster ihre korrekte Lage einnimmt und dass durch den Bund zudem ein Verschieben der Halterung auf den Boostern verhindert wird. Eine Entkopplung in radialer Richtung wird durch das Rohstück erreicht, so dass das Rohrstück in dessen Mitte gegriffen werden kann. Dieser Angriffs- und Lagerpunkt schwingt weder in radialer noch in axialer Richtung.

Vorteilhaft wird die Halterung an ihren beiden stirnseitigen Enden jeweils von einem Bund zumindest teilweise in radialer Richtung übergriffen. Die Montage erfolgt zum Beispiel durch Aufschrumpfen der Halterung auf die Booster.

Eine optimale Fixierung ohne zusätzliche Hilfsmittel wird dadurch erreicht, dass die Booster und die Halterung mittels einer Presspassung miteinander verbunden sind. Dies geschieht zum Beispiel, wie bereits erwähnt, durch Aufschrumpfen. Eine andere Möglichkeit der Verbindung besteht zum Beispiel darin, dass die Kontaktflächen mit Lot plattiert sind und die Halterung zum Beispiel in einem Lötofen angelötet wird.

Um ein Ultraschallbearbeiten in einem weiten Temperaturbereich zu garantieren, ist vorgesehen, dass die Presspassung über einen Temperaturbereich von -20°C bis +150°C, insbesondere von 0°C bis +120°C, bevorzugt von +20°C bis +100°C, garantiert ist. Dabei ist die Presspassung so berechnet, dass die Streckgrenze des schwächeren Materials nicht überschritten wird und dass die Materialausdehnungen so bemessen sind, dass über den gesamten Temperaturbereich die Presspassung garantiert ist.

Eine einfache Fixierung der Vorrichtung in einem Gestell wird dadurch erreicht, dass die Halterung an ihrer Außenseite ein Montagemittel aufweist, über welches die Halterung an einem Maschinengestell oder an einer Zuhaltung befestigbar bzw. lagerbar ist. Dabei befindet sich das Montagemittel im Bereich der axialen Mitte der Halterung, wo die radiale und axiale Schwingung nahezu Null ist. Das Rohrstück besitzt zum Beispiel eine Umfangsnut oder einen Umfangsbund.

Die Erfindung weist den Vorteil auf, dass ausgenommen der Passung keine spezielle Formgebung an der Lagerstelle erforderlich ist. Die Lagerungsart ist sehr biegesteif, da keine biegeweichen Elemente notwendig sind. Die Steifigkeit resultiert aus der doppelten Abstützung des Rohrstücks an den Boostern. Außerdem wird vorteilhaft ein sehr geringer Bauraum in radialer Richtung benötigt, da das Rohrstück hülsenförmig und mit geringer Wandstärke ausgeführt sein kann. Außerdem können sehr hohe Radialkräfte über die erfindungsgemäße Lagerung aufgenommen werden. Ferner ist die Schwingungsentkopplung optimal.

Weitere Merkmale, Einzelheiten und Vorteile der Erfindung ergeben sich aus den Unteransprüchen sowie der nachfolgenden Beschreibung, in der unter Bezugnahme auf die Zeichnung ein besonders bevorzugtes Ausführungsbeispiel im Einzelnen beschrieben ist. Dabei können die in der Zeichnung dargestellten sowie in der Beschreibung und in den Ansprüchen erwähnten Merkmale jeweils einzeln für sich oder in beliebiger Kombination erfindungswesentlich sein.

In der Zeichnung zeigen:
- Figur 1: einen Längsschnitt durch eine Lagerstelle der erfindungsgemäßen Vorrichtung; und
- Figur 2: eine vergrößerte Wiedergabe des Ausschnitts II gemäß Figur 1.

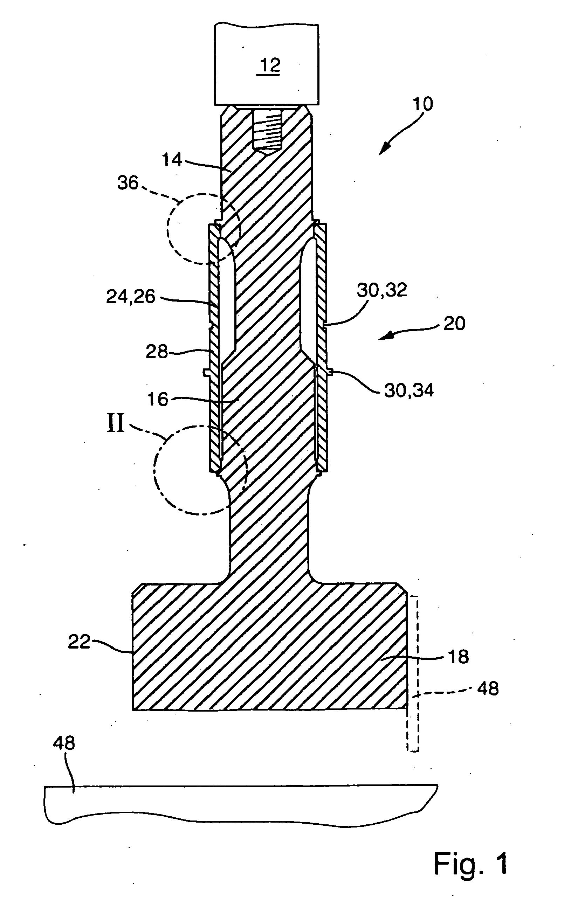

Die Figur 1 zeigt eine insgesamt mit 10 bezeichnete Ultraschallschwingeinheit, bei welcher in einem Konverter 12 Ultraschallschwingungen erzeugt werden, und der Konverter 12 diese Schwingungen über einen ersten Booster 14 und einen zweiten Booster 16 an eine Sonotrode 18 weiterleitet. Der Booster 16 und die Sonotrode 18 können einstückig hergestellt sein. Es besteht auch die Möglichkeit, dass die beiden Booster 14 und 16 und die Sonotrode 18 ein einteiliges Bauteil sind.

Die Figur 1 zeigt eine Ultraschallschwingeinheit 10, die vertikal angeordnet ist und bei welcher die Sonotrode 18 an ihrem unteren, nicht dargestellten Ende, die Arbeitsfläche aufweist, über welche sie an einem Werkstück 48 anliegt. Denkbar ist aber auch eine waagerechte Lage der Sonotrode 18, so dass die Ebene der Stirnfläche vertikal ausgerichtet ist.

Es besteht aber auch die Möglichkeit, die Sonotrode 18 auf beiden Seiten über Lagerstellen 20 zu lagern, wobei ihre Umfangsfläche 22 die Schweißfläche beziehungsweise die Arbeitsfläche darstellt, wie mit strichpunktierten Linien in Figur 1 angedeutet. In diesem Falle wirken nicht nur die Longitudinalschwingungen sondern hauptsächlich die Radialschwingungen auf das Werkstück 48 ein. Die Lage der Sonotrode 18, also die radiale oder die Waagerechte Ausrichtung, ist unabhängig davon, ob mit deren Stirnseite oder mit deren Umfang gearbeitet wird.

Die Lagerstelle 20 wird primär von einer Halterung 24 gebildet, die ein Rohrstück 26 oder eine Hülse aufweist, welches an den beiden Boostern 14 und 16 gelagert ist. Das Rohrstück 26 besitzt seinerseits im Bereich seiner axialen Mitte 28 Montagemittel 30, die von einer Umfangsnut 32 beziehungsweise einem Umfangsbund 34 gebildet werden. Über diese Montagemittel 30 wird das Rohrstück 26 an einem Maschinengestell oder einer Zuhaltung befestigt. Eine besondere Schwingungsentkopplung ist bei der Befestigung an ein Maschinengestell, Zuhaltung nicht mehr notwendig. Die Befestigung kann z.B. einfach verschraubt oder aufgepresst werden.

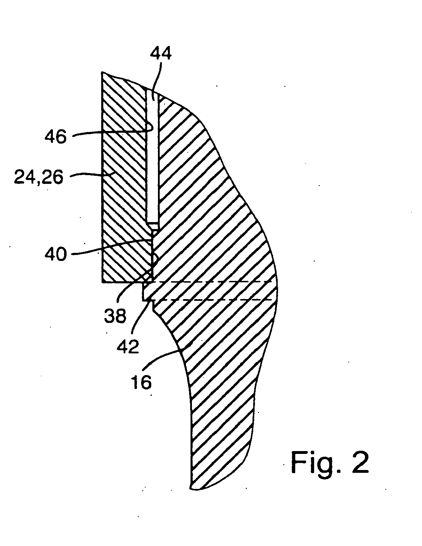

Die Figur 2 zeigt eine vergrößerte Wiedergabe des Ausschnitts II der Figur 1, wobei der mit 36 bezeichnete Bereich in gleicher Weise ausgebildet ist. Der Booster 16 besitzt eine umlaufende Kontaktfläche 38, auf welcher das Rohrstück 26 aufliegt. Dabei besitzt das Rohrstück 26 ebenfalls eine umlaufende Kontaktfläche 40, die von ihrer Dimension so bemessen ist, dass die beiden Kontaktflächen 38 und 40 über eine Presspassung aneinander anliegen.

Ferner ist in Figur 2 erkennbar, dass der Booster 16 einen umlaufenden Bund 42 aufweist, an welchem das Rohrstück 26 axial anliegt. Der Überstand des Bundes 42 über die Kontaktfläche 38 ist so bemessen, dass durch Erwärmung des Rohrstücks 26 dieses über den Bund 42 übergeschoben werden kann und das Rohrstück 26 dann beim Erkalten auf den Booster 16, bzw. auf die Kontaktfläche 38 aufgeschrumpft wird. Die Kontaktfläche 38 befindet sich in einem Schwingungsknoten des Boosters 16. Dadurch wird die Übertragung der Longitudinalamplitude auf die Halterung 24 verhindert beziehungsweise erheblich reduziert. Die Radialamplitude, die im Bereich der Kontaktfläche 38 ihr Maximum besitzt, wird durch das Rohrstück 26 aufgefangen. Jedoch reduziert sich die Radialamplitude erheblich in Richtung der Mitte 28.

Angrenzend an die beiden Kontaktflächen 38 und 40 besitzen der Booster 16 und das Rohrstück 26 jeweils einen Freischnitt 44 beziehungsweise 46. Hierdurch wird sichergestellt, dass das Rohrstück 26 lediglich über die Kontaktfläche 40 an der Kontaktfläche 38 des Boosters 16 anliegt. Wie bereits erwähnt, ist der Aufbau des Bereichs 36 der Lagerstelle 20 entsprechend ausgebildet. Auch dort weist der Booster 14 eine Kontaktfläche auf, die an einer Kontaktfläche des Rohrstücks 26 anliegt und es kann auch ein dem Bund 42 entsprechender umlaufender Bund vorgesehen sein.

Die Lagerstelle 20 dieser erfindungsgemäßen Vorrichtung baut in radialer Richtung wesentlich kleiner als beim Stand der Technik und es werden nahezu keine Schwingungen in longitudinaler und radialer Richtung übertragen.

## Patentansprüche

1. Vorrichtung zum Ultraschallbearbeiten eines Werkstücks (48) umfassend eine Ultraschallschwingeinheit (10) und gegebenenfalls ein Gegenwerkzeug, wobei das Werkstück (48) an der Ultraschallschwingeinheit (10) anliegt und die Ultraschallschwingeinheit (10) einen Konverter (12), einen Booster (14) und eine Sonotrode (18) aufweist, wobei zwischen dem Konverter (14) und der Sonotrode (18) ein weiterer Booster (16) vorgesehen ist und dass die beiden Booster (14, 16) eine Halterung (24) für die Ultraschallschwingeinheit (10) tragen, die ein die beiden Booster (14, 16) zumindest teilweise umgreifendes Rohrstück (26) aufweist, **dadurch gekennzeichnet, dass** das Rohrstück (26) die beiden Booster (14, 16) jeweils im Bereich der Schwingungsknoten kontaktiert und die beiden Booster (14, 16) im Bereich ihrer Schwingungsknoten eine insbesondere umlaufende Kontaktfläche (36) für die Halterung (24) aufweisen, wobei wenigstens einer der Booster (14 oder 16) angrenzend an die Kontaktfläche (38) einen umlaufenden Bund (42) aufweiset, an dem die Halterung (24) axial anliegt.

2. Vorrichtung nach Anspruch 1, **dadurch gekennzeichnet, dass** die Kontaktflächen (36) der beiden Booster (14, 16) in der gleichen Umfangfläche oder Umfangsebene liegen.

3. Vorrichtung nach Anspruch 1 oder 2, **dadurch gekennzeichnet, dass** die Booster (14, 16) und die Halterung (24) mittels einer Presspassung oder einer Verschraubung miteinander verbunden sind.

4. Vorrichtung nach Anspruch 3, **dadurch gekennzeichnet, dass** die Presspassung über einen Temperaturbereich von -20°C bis +150°C, insbesondere von +20°C bis +100°C, garantiert ist.

5. Vorrichtung nach einem der vorhergehenden Ansprüche, **dadurch gekennzeichnet, dass** die Halterung (24) an ihrer Außenseite ein Montagemittel (30) aufweist, über welches die Halterung (24) an einem Maschinengestell oder an einer Zuhaltung befestigbar ist.

6. Vorrichtung nach Anspruch 5, **dadurch gekennzeichnet, dass** das Montagemittel (30) im Bereich der axialen Mitte (28) der Halterung (24) liegt.

7. Vorrichtung nach Anspruch 5 oder 6, **dadurch gekennzeichnet, dass** das Montagemittel (30) eine Umfangsnut (32) oder ein Umfangsbund (34) ist.

8. Vorrichtung nach einem der vorhergehenden Ansprüche, **dadurch gekennzeichnet, dass** die Ultraschallschwingeinheit (10) einseitig oder beidseitig eine Halterung (24) trägt.

## Claims

1. A device for the ultrasonic processing of a workpiece (48) comprising an ultrasonic resonator (10) and optionally a counter-tool, with the workpiece (48) resting against the ultrasonic resonator (10) and the ultrasonic resonator (10) comprising a converter (12), a booster (14), and a sonotrode (18), between the converter (14) and the sonotrode (18) a further booster (16) being provided and the two boosters (14, 16) carrying a mount (24) for the ultrasonic resonator (10), which comprises a pipe section (26) that encompasses the two boosters (14, 16) at least partially, **characterized in that** the pipe section (26) contacts the two boosters (14, 16) in the region of the nodal points and that the two boosters (14, 16) in the region of the nodal points thereof comprise a, particularly peripheral, contact surface (36) for the mount (24), wherein at least one of the boosters (14 or 16) abutting the contact surface (38) comprises a peripheral collar (42), with the mount (24) being disposed thereon axially.

2. The device according to claim 1, **characterized in that** the contact surfaces (36) of the two boosters (14, 16) are located in the same circumferential surface or circumferential plane.

3. The device according to claim 1, **characterized in that** the boosters (14, 16) and the mount (24) are connected to one another by one of a press fit and a screw assembly.

4. The device according to claim 3, **characterized in that** the press fit is guaranteed across a temperature range of -20°C. to +150°C, especially of +20°C. to +100°C.

5. The device according one of the preceding claims, **characterized in that** the mount (24), on the outside thereof, comprises an installation means (30), via which the mount (24) can be fastened to a machine frame or a clamping device.

6. The device according to claim 5, **characterized in that** the installation means (30) lies in the region of the axial center (28) of the mount (24).

7. The device according to claim 5 or 6, **characterized in that** the installation means (30) is a peripheral groove (32) or a peripheral collar (34).

8. The device according to one of the preceding claims, **characterized in that** the ultrasonic resonator (10) carries a mount (24) on one side or both sides.

## Revendications

1. Dispositif d'usinage par ultrasons d'une pièce d'oeuvre (48) comprenant un ensemble vibrant à ultrasons (10) et éventuellement un contre-outil, la pièce d'oeuvre (48) étant en contact avec l'ensemble vibrant à ultrasons (10) et ledit ensemble vibrant à ultrasons (10) comprenant un convertisseur (12), un booster (14) et une sonotrode (18), un autre booster (16) étant prévu entre le convertisseur (14) et la sonotrode (18) et les deux boosters (14, 16) portant un élément de support (24) de l'ensemble vibrant à ultrasons (10), qui présente un élément tubulaire (26) entourant au moins partiellement les deux boosters (14, 16), **caractérisé en ce que** l'élément tubulaire (26) est en contact avec chacun des deux boosters (14, 16) au niveau des noeuds d'oscillation et **en ce que** les deux boosters (14, 16) présentent au niveau de leurs noeuds d'oscillation une surface de contact notamment périphérique (36) avec l'élément de support (24), au moins un des boosters (14 ou 16) présentant une collerette périphérique (42) adjacente à la surface de contact (38) et coopérant en appui axial avec l'élément de support (24).

2. Dispositif selon la revendication 1, **caractérisé en ce que** les surfaces de contact (36) des deux boosters (14, 16) sont comprises dans la même surface périphérique ou dans le même plan périphérique.

3. Dispositif selon la revendication 1 ou la revendication 2, **caractérisé en ce que** les boosters (14, 16) et l'élément de support (24) sont reliés entre eux par emmanchement à force ou vissage.

4. Dispositif selon la revendication 3, **caractérisé en ce que** l'ajustement serré est garanti sur une plage thermique comprise entre -20 °C et +150 °C, notamment entre +20 °C et +100 °C.

5. Dispositif selon l'une des revendications précédentes, **caractérisé en ce que** l'élément de support (24) présente sur sa face externe un moyen de montage (30) permettant de le fixer à un châssis de machine ou à un élément de blocage.

6. Dispositif selon la revendication 5, **caractérisé en ce que** le moyen de montage (30) est situé axialement au milieu (28) de l'élément de support (24).

7. Dispositif selon la revendication 5 ou la revendication 6, **caractérisé en ce que** le moyen de montage (30) comprend une gorge périphérique (32) ou une collerette périphérique (34).

8. Dispositif selon l'une des revendications précédentes, **caractérisé en ce que** l'ensemble vibrant à ultrasons (10) porte un élément de support (24) sur un ou deux côtés.
